# EUROPEAN PATENT APPLICATION

(11) **EP 4 094 623 A1**
(43) Date of publication of application: **30.11.2022**
(21) Application number: 22174735.5
(22) Date of filing: 23.05.2022
(51) Int. Cl.: A46B 5/00, A61C 17/16, A61C 17/22

(54) **AN ELECTRIC TOOTHBRUSH HEAD MADE OF BAMBOO PRODUCTS**

(30) Priority: 29.05.2021 CN 202121179221 U
(71) Applicant: Jiang, Qitao, 365100 Sanming Fujian (CN)
(72) Inventor: Jiang, Qitao, 365100 Sanming Fujian (CN)
(74) Representative: Cabinet Chaillot

(57) **Abstract**

The invention discloses an electric toothbrush head made of bamboo products, comprising a bamboo toothbrush handle; the right side of the top of the bamboo toothbrush handle is inlaid and fixed with bristles, and both the bamboo toothbrush handle and the bristles are degradable materials. The invention arranges a bamboo toothbrush handle, bristles, a positioning hole, a liner sleeve, an end connecting tube, a middle connecting tube, a tail connecting tube and glue grooves to be used together, opens a positioning hole on the left side of the bamboo toothbrush handle, applies glue on the surface of the tail connecting tube and inserts it into the inner cavity of the positioning hole, and then inlays the bottom of the bristles to the top of the bamboo toothbrush handle, therefore completing the production of the bamboo toothbrush handle. The invention solves the long-term ecological problem that people discard the damaged electric toothbrush heads in the river or soil at will, which are difficult to degrade because they are made of plastic, and the problem that when mixed in the soil, the plastic toothbrush heads will affect the absorption of nutrients and water by crops, and will cause digestive tract diseases and death of animals if eaten.

## Description

### TECHNICAL FIELD

The invention relates to the technical field of environmentally friendly toothbrush, in particular to an electric toothbrush head made of bamboo products.

### BACKGROUND

Compared with regular toothbrushes, electric toothbrushes can quickly remove plaque from between teeth, using high-frequency vibrations generated by battery products to quickly remove the tartar. The problems existing in the prior art are: people discard the damaged electric toothbrush heads in the river or soil at will, which are difficult to degrade because they are made of plastic; when mixed in the soil, the plastic toothbrush heads will affect the absorption of nutrients and water by crops, and will cause digestive tract diseases and death of animals if eaten.

### SUMMARY OF THE INVENTION

In view of the problems existing in the prior art, the invention provides an electric toothbrush head made of bamboo products. Environmentally friendly, the invention solves the problem that people discard the damaged electric toothbrush heads in the river or soil at will, which are difficult to degrade because they are made of plastic, and the problem that when mixed in the soil, the plastic toothbrush heads will affect the absorption of nutrients and water by crops, and will cause digestive tract diseases and death of animals if eaten.

The invention is realized in the way as follows: an electric toothbrush head made of bamboo products, comprising a bamboo toothbrush handle; the right side of the top of the bamboo toothbrush handle is inlaid and fixed with bristles, and both the bamboo toothbrush handle and the bristles are degradable materials; the left end of the bamboo toothbrush handle is the shape of a circular cone, and the right end of the bamboo toothbrush handle is flat; the left side inside the bamboo toothbrush handle is fixedly connected with a plug-in assembly used in cooperation with the output shaft of the electric toothbrush.

As preferred of the invention, the left side of the bamboo toothbrush handle is provided with a positioning hole, and the inner cavity of the positioning hole is fixedly connected with a liner sleeve through glue.

As preferred of the invention, the liner sleeve is a component of degradable material.

As preferred of the invention, the degradable material of the liner sleeve is degradable plastic or polylactic acid (PLA) degradable material.

As preferred of the invention, the liner sleeve comprises a middle connecting tube; an end connecting tube is fixedly connected to the left side of the middle connecting tube, the right side of the middle connecting tube is fixedly connected with a tail connecting tube, and the top and bottom of the tail connecting tube are provided with glue grooves.

As preferred of the invention, the radius of the end connecting tube, the middle connecting tube and the tail connecting tube decreases in order; the outer diameter of the end connecting tube is equal to the inner diameter of the opening of the positioning hole, and the outer diameter of the middle connecting tube is equal to the inner diameter of the bottom of the positioning hole.

As preferred of the invention, the front and rear sides of the left end of the bamboo toothbrush handle are arc-shaped, and the front and rear sides of the right end of the bamboo toothbrush handle are elliptical.

Compared with the prior art, the advantageous effects are as follows:
1. The invention arranges the bamboo toothbrush handle, the bristles, the positioning hole, the liner sleeve, the end connecting tube, the middle connecting tube, the tail connecting tube and the glue groove to be used together, opens a positioning hole on the left side of the bamboo toothbrush handle, applies glue on the surface of the tail connecting tube and inserts it into the inner cavity of the positioning hole, and then inlays the bottom of the bristles to the top of the bamboo toothbrush handle, therefore completing the production of the bamboo toothbrush handle. The invention solves the long-term ecological problem that people discard the damaged electric toothbrush heads in the river or soil at will, which are difficult to degrade because they are made of plastic, and the problem that when mixed in the soil, the plastic toothbrush heads will affect the absorption of nutrients and water by crops, and will cause digestive tract diseases and death of animals if eaten.
2. The invention arranges a positioning hole and a liner sleeve. The positioning hole on the left side of the bamboo toothbrush handle can be quickly glued with the liner sleeve, which is convenient for the connection between the bamboo toothbrush handle and the output shaft of the electric toothbrush.
3. The invention arranges a liner sleeve. The liner sleeve is made of degradable material, which reduces the chemical pollution caused by the production of the electric toothbrush head. Additionally, the material of the bamboo toothbrush handle is convenient to achieve and the production speed is faster.
4. The invention arranges a liner sleeve. The liner sleeve is made of degradable plastic or polylactic acid(PLA) degradable material, which can degrade quickly even if it is discarded in the soil without affecting the surrounding environment.
5. The invention arranges a middle connecting tube, an end connecting tube and a tail connecting tube. Apply glue to the surface of the tail connecting tube to contact with the positioning hole, which can prevent the glue from overflowing, and the glue flowing into the glue groove can increase the reliability of the liner sleeve.
6. The invention arranges a middle connecting tube, an end connecting tube and a tail connecting tube. The three-layer structure of the liner sleeve can increase the connection stability of the bamboo toothbrush handle, and it will not fall off easily when shaken.
7. The invention arranges a bamboo toothbrush handle. One end of the bamboo toothbrush handle is processed into a curved surface, which can be better used in the oral cavity, and will not scratch the muscles of the mouth when rubbing in the oral cavity; the other end is processed into an oval shape to better match the electric toothbrushes on the market.

### BRIEF DESCRIPTION OF THE DRAWINGS

FIG. 1 is the structure diagram provided by an embodiment of the invention;
FIG. 2 is a front sectional view provided by an embodiment of the invention;
FIG. 3 is a three-dimensional schematic diagram of the liner sleeve provided by an embodiment of the invention.

In the figure, 1 refers to the bamboo toothbrush handle; 2 refers to the bristles; 3 refers to the positioning hole; 4 refers to the liner sleeve; 41 refers to the end connecting tube; 42 refers to the middle connecting tube; 43 refers to the tail connecting tube; 44 refers to the glue groove.

### DESCRIPTION OF EMBODIMENTS

In order to further understand the content, features and effects of the invention, the following embodiments are exemplified and described in detail as follows with the accompanying drawings.

The invention is further described in detail hereinafter with reference to the drawings.

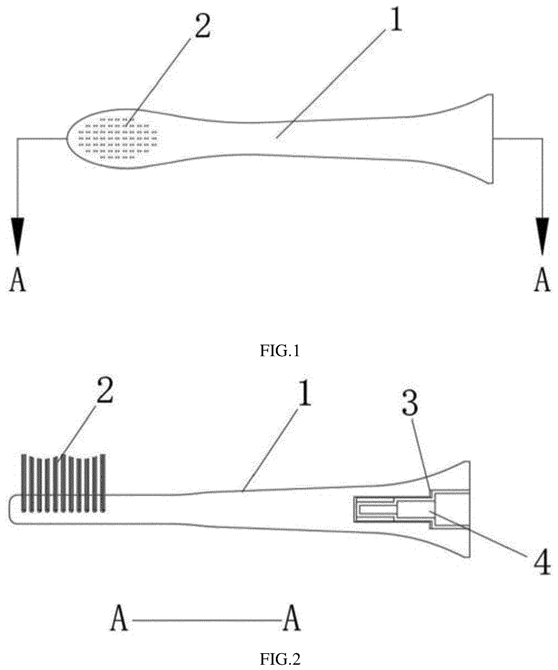

Referring to FIG.1 to FIG. 3, the embodiment of the invention provides an electric toothbrush head made of bamboo products, comprising a bamboo toothbrush handle 1; the right side of the top of the bamboo toothbrush handle 1 is inlaid and fixed with bristles 2, and both the bamboo toothbrush handle 1 and the bristles 2 are degradable materials; the left end of the bamboo toothbrush handle 1 is the shape of a circular cone, and the right end of the bamboo toothbrush handle 1 is flat; the left side inside the bamboo toothbrush handle 1 is fixedly connected with a plug-in assembly used in cooperation with the output shaft of the electric toothbrush.

Referring to FIG. 2, a positioning hole 3 is opened on the left side of the bamboo toothbrush handle 1, and a liner sleeve 4 is fixedly connected to the inner cavity of the positioning hole 3 through glue.

Adopt the above scheme: arranging the positioning hole 3 and the liner sleeve 4. The positioning hole 3 on the left side of the bamboo toothbrush handle 1 can be quickly glued with the liner sleeve 4, which is convenient for the connection between the bamboo toothbrush handle and the output shaft of the electric toothbrush.

Referring to FIG. 1, the liner sleeve 4 is a component made of degradable material.

Adopt the above scheme: arranging the liner sleeve 4. The liner sleeve 4 is made of degradable material, which reduces the chemical pollution caused by the production of the electric toothbrush head. Additionally, the material of the bamboo toothbrush handle 1 is convenient to achieve and the production speed is faster.

Referring to FIG. 1, the degradable material of the liner sleeve 4 is degradable plastic or polylactic acid (PLA) degradable material.

Adopt the above scheme: arranging the liner sleeve 4; the liner sleeve 4 is made of degradable plastic or polylactic acid(PLA) degradable material, which can degrade quickly even if it is discarded in the soil without affecting the surrounding environment.

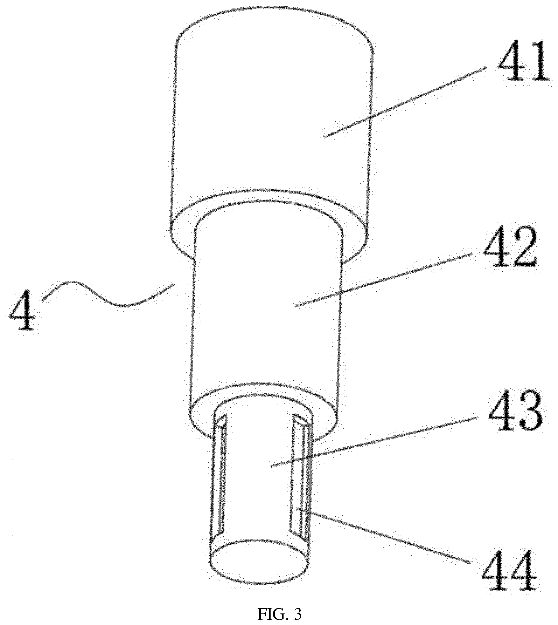

Referring to FIG. 3, the liner sleeve 4 comprises a middle connecting tube 42; an end connecting tube 41 is fixedly connected to the left side of the middle connecting tube 42, the right side of the middle connecting tube 42 is fixedly connected with a tail connecting tube 43, and the top and bottom of the tail connecting tube 43 are provided with glue grooves 44.

Adopt the above scheme: arranging a middle connecting tube 42, an end connecting tube 41 and a tail connecting tube 43; apply glue to the surface of the tail connecting tube 43 to contact with the positioning hole 3, which can prevent the glue from overflowing, and the glue flowing into the glue groove 44 can increase the reliability of the liner sleeve 4.

Referring to FIG. 3, the radius of the end connecting tube 41, the middle connecting tube 42 and the tail connecting tube 43 decreases in order; the outer diameter of the end connecting tube 41 is equal to the inner diameter of the opening of the positioning hole 3, and the outer diameter of the middle connecting tube 42 is equal to the inner diameter of the bottom of the positioning hole 3.

Adopt the above scheme: arranging a middle connecting tube 42, an end connecting tube 41 and a tail connecting tube 43; the three-layer structure of the liner sleeve 4 can increase the connection stability of the bamboo toothbrush handle 1, and it will not fall off easily when shaken.

Referring to FIG. 1, the front and rear sides of the left end of the bamboo toothbrush handle 1 are arc-shaped, and the front and rear sides of the right end of the bamboo toothbrush handle 1 are elliptical.

Adopt the above scheme: arranging a bamboo toothbrush handle 1; one end of the bamboo toothbrush handle 1 is processed into a curved surface, which can be better used in the oral cavity, and will not scratch the muscles of the mouth when rubbing in the oral cavity; the other end is processed into an oval shape to better match the electric toothbrushes on the market.

The working principle of the invention:
During the production of bamboo toothbrush handle 1, select and cut a bamboo strip of suitable length, and turn one end of the bamboo strip into an oblate shape, and the other end of the bamboo strip into a conical shape, then the bamboo strip is processed into a bamboo toothbrush handle 1. Open a positioning hole 3 on the left side of the bamboo toothbrush handle 1, apply glue to the surface of the tail connecting tube 43, and insert it into the inner cavity of the positioning hole 3. Then, inlay the bottom of the bristles 2 on the top of the bamboo toothbrush handle 1 to complete the manufacture of the bamboo toothbrush handle 1, which is convenient for the users to use.

In summary: the invention arranges a bamboo toothbrush handle, bristles, a positioning hole, a liner sleeve, an end connecting tube, a middle connecting tube, a tail connecting tube and glue grooves to be used together, opens a positioning hole on the left side of the bamboo toothbrush handle, applies glue on the surface of the tail connecting tube and inserts it into the inner cavity of the positioning hole, and then inlays the bottom of the bristles to the top of the bamboo toothbrush handle, therefore completing the production of the bamboo toothbrush handle. The invention solves the long-term ecological problem that people discard the damaged electric toothbrush heads in the river or soil at will, which are difficult to degrade because they are made of plastic, and the problem that when mixed in the soil, the plastic toothbrush heads will affect the absorption of nutrients and water by crops, and will cause digestive tract diseases and death of animals if eaten.

It should be noted that, in the essay, relational terms such as "first" and "second" are only used to distinguish one entity or operation from another entity or operation, rather than necessarily requiring or implying any such actual relationships or sequences between these entities or operations. Moreover, the terms "comprise", "include" or any other variation thereof are intended to cover non-exclusive inclusion, so that a process, method, article or device that includes a series of elements includes not only those elements, and also include other elements not expressly listed or inherent to such a process, method, article or device.

Although the embodiments of the invention have been shown and described, it should be understood by those skilled in the art that various changes, amendments, substitutions and modifications can be made to these embodiments without departing from the principles and spirit of the invention. The protection scope of the present invention is defined by the appended claims and their equivalents.

## Claims

1. An electric toothbrush head made of bamboo products, comprising a bamboo toothbrush handle (1); the right side of the top of the bamboo toothbrush handle (1) is inlaid and fixed with bristles (2), and both the bamboo toothbrush handle (1) and the bristles (2) are degradable materials; the left end of the bamboo toothbrush handle (1) is the shape of a circular cone, and the right end of the bamboo toothbrush handle (1) is flat; the left side inside the bamboo toothbrush handle (1) is fixedly connected with a plug-in assembly used in cooperation with the output shaft of the electric toothbrush.

2. The electric toothbrush head made of bamboo products according to Claim 1, wherein the left side of the bamboo toothbrush handle (1) is provided with a positioning hole (3), and the inner cavity of the positioning hole (3) is fixedly connected with a liner sleeve (4) through glue.

3. The electric toothbrush head made of bamboo products according to Claim 2, wherein the liner sleeve (4) is a component of degradable material.

4. The electric toothbrush head made of bamboo products according to Claim 2, wherein the degradable material of the liner sleeve (4) is degradable plastic or polylactic acid (PLA) degradable material.

5. The electric toothbrush head made of bamboo products according to Claim 2, wherein the liner sleeve (4) comprises a middle connecting tube (42); an end connecting tube (41) is fixedly connected to the left side of the middle connecting tube (42), the right side of the middle connecting tube (42) is fixedly connected with a tail connecting tube (43), and the top and bottom of the tail connecting tube (43) are provided with glue grooves (44).

6. The electric toothbrush head made of bamboo products according to Claim 5, wherein the radius of the end connecting tube (41), the middle connecting tube (42) and the tail connecting tube (43) decreases in order; the outer diameter of the end connecting tube (41) is equal to the inner diameter of the opening of the positioning hole (3), and the outer diameter of the middle connecting tube (42) is equal to the inner diameter of the bottom of the positioning hole (3).

7. The electric toothbrush head made of bamboo products according to Claim 1, wherein the front and rear sides of the left end of the bamboo toothbrush handle (1) are arc-shaped, and the front and rear sides of the right end of the bamboo toothbrush handle (1) are elliptical.
